# EUROPEAN PATENT APPLICATION

(11) **EP 4 848 186 A1**
(43) Date of publication of application: **02.12.2026**
(21) Application number: 24920016.3
(22) Date of filing: 31.12.2024
(51) Int. Cl.: G06Q 30/0601

(54) **PRODUCT REVIEW CONTENT GENERATING METHOD AND ELECTRONIC DEVICE**

(30) Priority: 26.01.2024 CN 202410114831
(71) Applicant: Hangzhou Alibaba International Internet Industry Co., Ltd., Hangzhou, Zhejiang 310052 (CN)
(72) Inventor: JIANG, Xiangao, Hangzhou, Zhejiang 311121 (CN)
(74) Representative: Wu, Ting
(86) International application number: PCT/CN2024/144148
(87) International publication number: WO 2025/156938

(57) **Abstract**

The embodiments of the present disclosure disclose a method for generating product review content and an electronic device. The method includes: determining a target product for which review content supplementation is to be performed, where the target product includes a newly released product and/or a product with a number of user reviews less than a threshold; acquiring source material content, where the source material content includes information related to the target product itself, and/or user review content corresponding to at least one associated product of the target product; and invoking a pre-trained artificial intelligence (AI) content generation model based on the source material content, so that the AI content generation model generates product review content for the target product, for display on a target page associated with the target product. Through the embodiments of the present disclosure, product review content can be enriched, and metrics such as the conversion rate of product detail pages and other pages can be improved.

## Description

This application claims priority to Chinese Patent Application No. 202410114831.5, filed with the China National Intellectual Property Administration on January 26, 2024, entitled "Method for Generating Product Review Content and Electronic Device", the entire contents of which are incorporated herein by reference.

### TECHNICAL FIELD

The present disclosure relates to the field of content generation technology, and more particularly to a method for generating product review content and an electronic device.

### BACKGROUND

In a product information service system, the quantity and quality of user reviews for a product are strongly correlated with the product's D-O conversion (user conversion rate from the product detail page to placing an order). Generally, if a product has a relatively large number of user reviews of relatively high quality, this can lead to a higher D-O conversion rate. However, such user review data relies on users actively submitting reviews. Although platform operators or merchants can encourage users to submit reviews by offering additional incentives, situations frequently arise in which users abandon the review submission process or submit reviews with overly simple content of limited reference value, such that the effective user review submission rate for a product may be relatively low. Moreover, for newly released products, this phenomenon of low user review submission rates tends to be even more pronounced.

### SUMMARY

The present disclosure provides a method for generating product review content and an electronic device, capable of enriching product review content and improving metrics such as the conversion rate of pages including product detail pages.

The present disclosure provides the following solutions:
a method for generating product review content, comprising:
determining a target product for which review content supplementation is to be performed, wherein the target product comprises a newly released product and/or a product with a number of user reviews less than a threshold;
acquiring source material content, where the source material content includes information related to the target product itself, and/or user review content corresponding to at least one associated product of the target product;
invoking a pre-trained artificial intelligence (AI) content generation model based on the source material content, so that the AI content generation model generates product review content for the target product, for display on a target page associated with the target product.

Here, the information related to the target product itself comprises: detailed description information of the target product, and/or conversation record information related to the target product in a customer service system.

Here, the at least one associated product comprises a same-style/similar-style product of the target product, and/or a product under the leaf category to which the target product belongs.

Here, the product review content comprises a plurality of pieces, each used to evaluate the target product from a different dimension.

Here, the AI content generation model is specifically configured to generate, based on the source material content, core decision attributes at the target product granularity, such that the generated product review content includes the core decision attributes and their attribute values.

Here, the attribute values corresponding to the core decision attributes are quantitatively expressed fine-grained attribute values.

Here, the associated products comprise products under the leaf category to which the target product belongs;
the AI content generation model is further configured to generate, based on information of products under the leaf category to which the target product belongs, core decision attributes at the leaf category granularity and corresponding optional candidate attribute values, so as to provide structured review guidance information after receiving a request submitted by a user to submit a review for the target product.

Here, the AI content generation model is further configured to generate, based on information related to the target product itself, Q&A-style opinion feedback content for the target product.

A method for displaying a product detail page, comprising:
in response to a request to display a detail page of a target product, acquiring product review content generated by an AI content generation model for the target product based on source material content, where the target product includes a newly released product and/or a product with a number of user reviews less than a threshold, and the source material content includes information related to the target product itself, and/or user review content corresponding to at least one associated product of the target product;
displaying the product review content generated by the AI content generation model based on the detail page.

The AI content generation model is specifically configured to summarize the product review content from the source material content, and/or extract representative user review content from user review content corresponding to at least one associated product of the target product, to be used as product review content for the target product;
the displaying the product review content generated by the AI content generation model based on the detail page comprises:
displaying the product review content summarized by the AI content generation model based on the detail page of the target product, and/or citing the representative user review content corresponding to the at least one associated product extracted by the AI content generation model.

Here, the displaying the product review content generated by the AI content generation model based on the detail page comprises:
displaying the product review content generated by the AI content generation model in a user review content display area on the detail page.

Here, the displaying the product review content generated by the AI content generation model based on the detail page comprises:
adding a separate AI-generated content display sub-area in the user review content display area of the detail page, and displaying the product review content generated by the AI content generation model in the AI-generated content display sub-area.

A method for displaying a product detail page, comprising:
in response to a request to display a detail page of a target product, acquiring Q&A-style opinion feedback content generated by an AI content generation model for the target product based on source material content, where the target product includes a newly released product and/or a product with Q&A-style opinion feedback content less than a threshold, and the source material content includes detailed description information of the target product, and/or conversation record information related to the target product in a customer service system;
displaying the Q&A-style opinion feedback content generated by the AI content generation model in a Q&A-style opinion feedback content display area on the detail page.

A method for displaying a product review editing interface, comprising:
in response to a request to fill in user review content for a target product, acquiring structured review guidance information generated by an AI content generation model for the leaf category to which the target product belongs based on source material content, where the target product comprises a newly released product and/or a product with a number of user reviews less than a threshold, the structured review guidance information comprises core decision attributes at the leaf category granularity and corresponding optional candidate attribute values, and the source material content comprises user review content of products under the leaf category to which the target product belongs;
displaying the structured review guidance information to facilitate filling in the user review content based on the structured review guidance information.

A product review content generation apparatus, comprising:
a target product determination unit, configured to determine a target product for which review content supplementation is to be performed, where the target product comprises a newly released product and/or a product with a number of user reviews less than a threshold;
a source material content acquisition unit, configured to acquire source material content, where the source material content includes information related to the target product itself, and/or user review content corresponding to at least one associated product of the target product;
a review content generation unit, configured to invoke a pre-trained artificial intelligence AI content generation model based on the source material content, so as to generate product review content for the target product through the AI content generation model, for display on a target page associated with the target product.

An apparatus for displaying a product detail page, comprising:
a product review content acquisition unit, configured to, in response to a request to display a detail page of a target product, acquire product review content generated by an AI content generation model for the target product based on source material content, where the target product includes a newly released product and/or a product with a number of user reviews less than a threshold, and the source material content includes information related to the target product itself, and/or user review content corresponding to at least one associated product of the target product;
a product review content display unit, configured to display the product review content generated by the AI content generation model based on the detail page.

An apparatus for displaying a product detail page, comprising:
a Q&A-style opinion feedback content acquisition unit, configured to, in response to a request to display a detail page of a target product, acquire Q&A-style opinion feedback content generated by an AI content generation model for the target product based on source material content, where the target product includes a newly released product and/or a product with Q&A-style opinion feedback content less than a threshold, and the source material content includes detailed description information of the target product, and/or conversation record information related to the target product in a customer service system;
a Q&A-style opinion feedback content display unit, configured to display the Q&A-style opinion feedback content generated by the AI content generation model in the Q&A-style opinion feedback content display area of the detail page.

An apparatus for displaying a product review editing interface, comprising:
a structured review guidance information acquisition unit, configured to, in response to a request to fill in user review content for a target product, acquire structured review guidance information generated by an AI content generation model based on source material content for the leaf category to which the target product belongs, where the target product includes a newly released product and/or a product with a number of user reviews less than a threshold, the structured review guidance information includes core decision attributes at the leaf category granularity and corresponding optional candidate attribute values, and the source material content includes user review content of products under the leaf category to which the target product belongs;
a structured review guidance information display unit, configured to display the structured review guidance information so as to complete the filling in of user review content based on the structured review guidance information.

A computer-readable storage medium having a computer program stored thereon, wherein the computer program, when executed by a processor, implements the steps of any one of the foregoing methods.

An electronic device, comprising:
one or more processors; and
a memory associated with the one or more processors, wherein the memory is configured to store program instructions that, when read and executed by the one or more processors, implement the steps of any one of the foregoing methods.

A computer program product comprising computer programs/computer-executable instructions that, when executed by a processor in an electronic device, implement the steps of any one of the foregoing methods.

According to the specific embodiments provided by the present disclosure, the present disclosure discloses the following technical effects:

Through the embodiments of the present disclosure, for newly released products or target products with a relatively low user review submission rate, information related to the target product itself and/or user review content corresponding to at least one associated product of the target product may be acquired as source material content, and a pre-trained artificial intelligence AI content generation model may be invoked based on the source material content so as to generate product review content for the target product through the AI content generation model. Such AI-generated product review content may be used for display on a target page associated with the target product. In this way, the AI-generated product review content can serve as a supplement to user review content, thereby helping users make purchasing decisions and contributing to the improvement of metrics such as the conversion rate of pages like product detail pages.

Of course, implementing any product of the present disclosure does not necessarily require achieving all of the advantages described above at the same time.

### BRIEF DESCRIPTION OF THE DRAWINGS

In order to more clearly illustrate the embodiments of the present disclosure or the technical solutions in the prior art, the drawings to be used in the embodiments will be briefly described below. Obviously, the drawings described below are only some embodiments of the present disclosure, and for those of ordinary skill in the art, other drawings may also be obtained based on these drawings without any creative effort.
FIG. 1 is a schematic diagram of a system architecture provided by an embodiment of the present disclosure;
FIG. 2 is a flowchart of a first method provided by an embodiment of the present disclosure;
FIG. 3 is a schematic diagram of a first interface provided by an embodiment of the present disclosure;
FIG. 4 is a schematic diagram of a second interface provided by an embodiment of the present disclosure;
FIG. 5 is a flowchart of a second method provided by an embodiment of the present disclosure;
FIG. 6 is a flowchart of a third method provided by an embodiment of the present disclosure;
FIG. 7 is a flowchart of a fourth method provided by an embodiment of the present disclosure;
FIG. 8 is a schematic diagram of an electronic device provided by an embodiment of the present disclosure.

### DETAILED DESCRIPTION OF THE EMBODIMENTS

The technical solutions in the embodiments of the present disclosure will be described clearly and completely with reference to the drawings in the embodiments of the present disclosure. Obviously, the described embodiments are only some of the embodiments of the present disclosure, rather than all of the embodiments. Based on the embodiments of the present disclosure, all other embodiments obtained by those of ordinary skill in the art fall within the scope of protection of the present disclosure.

In the embodiments of the present disclosure, for newly released products in the system or products with a relatively low user review submission rate, an AIGC (Artificial Intelligence General Computationalism)-based approach may be used to supplement review content for such products. Here, AIGC describes a theoretical framework that holds that artificial intelligence systems can achieve intelligence by imitating human intelligent behavior and thought processes. The core idea of AIGC is that artificial intelligence systems can achieve intelligent behavior by using computational models to simulate the human brain and cognitive processes. In other words, computational models can provide explanations and simulations of human intelligence, and can also be used to build higher-level artificial intelligence systems. The goal of AIGC is to establish a theoretical framework to better understand and implement artificial intelligence.

Based on the above framework, various content generation models have emerged in the industry, including "text-to-text" models (generating text based on text), "text-to-image" models (generating images based on text), "image-to-text" models (generating text based on images), and so on. In the embodiments of the present disclosure, the capabilities of the above-mentioned AI content generation models may be leveraged to generate review content for specific products, to serve as a supplement to user review content.

It should be noted that, in some implementations, an AI content generation model may be used to summarize user review content for a product to help users more quickly understand the overall evaluation of that product by users. However, this approach is generally suitable for products with a relatively high user review submission rate. Since the target products in the embodiments of the present disclosure are typically newly released products or products with a relatively low user review submission rate, the above approach would no longer be applicable to the scenarios in the embodiments of the present disclosure. To this end, in the embodiments of the present disclosure, the detailed description information of the specific product itself, the conversation record information in the customer service system, and the user review content of some associated products (e.g., same-style/similar-style products, products under the same leaf category, etc.) may be used as input to a large AI model. The large AI model may then understand and summarize the above source material content to generate review content in a specified format. In this way, such AI-generated review content may be displayed in the user review section of the product detail page as a supplement to user review content, to help users browsing the product make purchasing decisions and improve the D-O conversion rate.

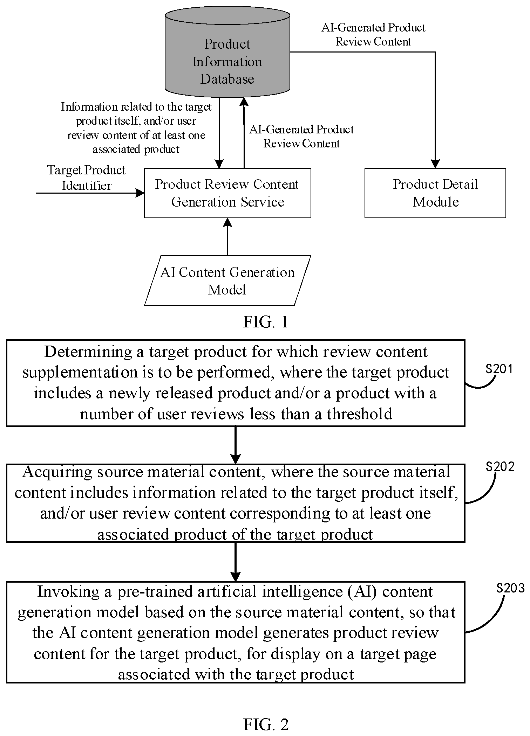

From a system architecture perspective, referring to FIG. 1, the embodiments of the present disclosure may provide a product review content generation service. A specific review content generation process may be initiated by inputting an identifier of a target product (e.g., a product ID) into the service. Thereafter, information about the target product itself (including detailed description information and conversation record information in the customer service system) and user review content of associated products of the target product may be acquired from a product information database and the like as source material content, which may be input into an AI content generation model to generate product review content for the target product. The generated review content may be saved to the product information database. When a user needs to view a detail page or other pages of the target product, such AI-generated product review content may be displayed through the detail page, so as to reduce the likelihood of users abandoning their orders due to a lack of review content or insufficient review content.

The specific implementation solutions provided by the embodiments of the present disclosure are described in detail below.

First, from the perspective of the above-mentioned review content generation service, the embodiments of the present disclosure provide a method for generating product review content. Referring to FIG. 2, the method may include:
S201: determining a target product for which review content supplementation is to be performed, where the target product includes a newly released product and/or a product with a number of user reviews less than a threshold.

Here, the target product may specifically be a newly released product in a product information service system (referred to as a "newly released product"), or a product with a relatively low user review submission rate, i.e., a product with a relatively small number of user reviews, and so on. In a specific implementation, the review content generation service provided by the embodiments of the present disclosure may be made available to system staff or merchant users. Users may initiate a specific generation process by inputting the ID of a specific product, or the service may automatically screen products from the product database that meet the criteria as target products, and so on.

S202: acquiring source material content, where the source material content includes information related to the target product itself, and/or user review content corresponding to at least one associated product of the target product.

After the target product is determined, relevant source material content may be acquired. Specifically, since the target product in the embodiments of the present disclosure is a product that has not yet received any user reviews, or has received only a very small number of user reviews, it is not possible to directly generate review content by having the AI content generation model summarize from the existing user review content of the target product itself. Therefore, the source material content acquired in the embodiments of the present disclosure may include information related to the target product itself, and/or user review content corresponding to at least one associated product of the target product. That is to say, the specific source material content is either derived from certain information related to the target product itself, or from user review content that has already been received by associated products of the target product.

Here, the information related to the target product itself may specifically include detailed description information of the product (including images, text, video, etc.), and may also include conversation content related to the target product in the customer service system (i.e., conversation records generated during conversations between users and customer service representatives or customer service chatbots of the store), and so on.

There may be multiple types of associated products of the target product. For example, they may be same-style/similar-style products of the current target product, or they may be some products under the leaf category to which the target product belongs, and so on. Here, same-style or similar-style products generally refer to products that have the same or similar attribute values as the current target product in certain key attributes. For example, for a clothing product A, if another clothing product B is the same or similar in terms of brand, style, color, and so on, then product B is a same-style or similar-style product of product A.

That is to say, although the target product itself may not yet have received user review content, or may have very little user review content, the user review content of same-style/similar-style products of the target product may be used as source material content for reference, to be used to generate review content for the target product. In addition, if a specific product has no same-style or similar-style products, or if its same-style or similar-style products also have no user review content or have very little user review content, then the user review content of products under the leaf category to which the current target product belongs may also be used as a reference, to be used to generate review content for the target product.

Here, a leaf category is the most specific classification in a product classification hierarchy. It describes the most detailed attribute information of products and can precisely locate the type of product. Different leaf categories are independent of each other and have no hierarchical relationship among themselves. For example, the "Apparel" category may include "Women's Clothing," "Men's Clothing," "Children's Clothing," etc.; the "Women's Clothing" category may include "Women's Pants," "Outerwear," "Women's Skirts," "Suits," etc.; and the "Women's Pants" category may further include "Casual Pants," "Jeans," "Leggings," and so on. Among these, "Casual Pants," "Jeans," and "Leggings" are at a level that has no further subdivided subcategories, and therefore belong to leaf categories. That is, assuming the current target product is product A, and the leaf category to which it belongs is "Casual Pants," then the user review content of other products under the "Casual Pants" category may be used as a reference to generate review content for product A.

S203: invoking a pre-trained artificial intelligence (AI) content generation model based on the source material content, so that the AI content generation model generates product review content for the target product, for display on a target page associated with the target product.

After acquiring the source material content, a pre-trained AI content generation model may be invoked based on the source material content, so as to generate product review content for the target product through the AI content generation model. The AI content generation model may be a "text-to-text" type content generation model, that is, it may generate text-based content based on text-based source material. Of course, in specific implementations, since the specific source material content may also include image-based source material and audio-based source material, an image understanding model, an audio understanding model, or the like may be used to pre-process this portion of the source material content to generate relevant text content, after which the product review content is generated.

In a specific implementation, the specifically generated product review content may comprise multiple entries, each used to evaluate the target product from a different dimension. That is, when a user reviews a product, they may do so from multiple dimensions; if the review content across all these dimensions were placed into a single review entry, the content might be too long and the key points insufficiently prominent, among other issues. Therefore, in the embodiments of the present disclosure, when AI generates review content, the review content across different dimensions may be placed into multiple separate review entries, so that the key points of each review entry are more prominent; additionally, this may also serve to increase the quantity of review content, among other effects. For example, assuming the current target product is a pendant, different review content may be generated separately from dimensions such as applicable occasions and craftsmanship, and so on.

Regarding the AI-generated product review content, the embodiments of the present disclosure may also perform special processing. Specifically, the AI content generation model may first generate core decision attributes at the target product granularity based on the source material content - that is, determine which attributes users need to focus on during their decision-making process for the current target product, and these attributes become the core decision attributes of the target product. Furthermore, the specifically generated product review content may include the core decision attributes and their corresponding attribute values. In a preferred implementation, these attribute values may further be quantitatively expressed fine-grained attribute values, rather than merely qualitative and vague evaluations. For example, with respect to the parameters and performance of certain products, instead of simply evaluating them as qualitative descriptions such as "fast," "slow," "large," or "small," the values can be expressed as specific numbers. Of course, for some products, both quantitative and qualitative attribute values may be included simultaneously, so that users can have a more intuitive sense of the specific values, and so forth. In summary, decision factors (i.e., the aforementioned core decision attributes) may be introduced into the generated product review content, and the content may be tailored to users' minds at the finest granularity, so that the generated product review content truly serves the purpose of helping users make decisions.

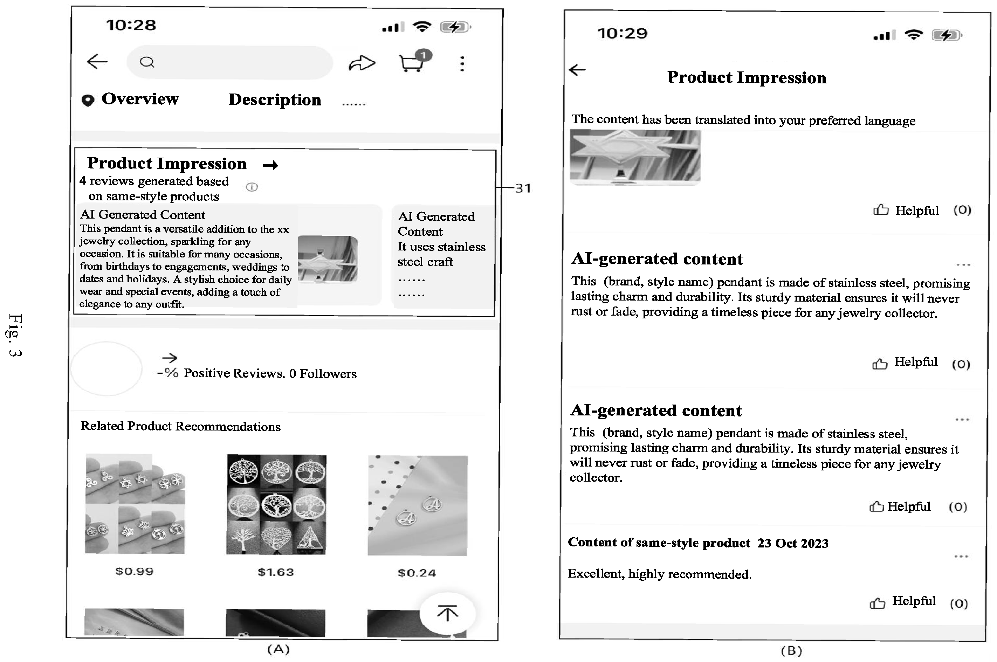

After the above product review content has been generated, such AI-generated product review content may be displayed on pages associated with the target product. For example, such product review content may be displayed directly in the user review content display area of the target product's product detail page; of course, during the display process, an "AI Generated" label may be added to distinguish it from user review content posted by users. Alternatively, in another approach, a separate AI-generated content display sub-area may be added within the user review content display area of the product detail page, and the product review content generated by the AI content generation model may then be displayed in the AI-generated content display sub-area. For example, as shown in (A) of FIG. 3, assuming the target product is a pendant, the "Product Impression" area indicated by 31 on the product detail page is the AI-generated content display sub-area newly added in the embodiments of the present disclosure, and information related to the AI-generated product review content may be displayed within this sub-area. Of course, to avoid excessive impact of such AI-generated content on the display of user review content for the product, in a specific implementation, such an independent AI-generated content display sub-area may, by default, display only partial information about the AI-generated product review content - for example, assuming the AI has generated a total of 4 pieces of product review content, only one or two of them may be displayed by default, and so forth, to avoid occupying too much of the user review content display area. In addition, the AI-generated content display sub-area may also respond to a user's interactive operation - for example, after the user clicks on the area to view it, the sub-area may be expanded and enlarged, at which point an interface as shown in (B) of FIG. 3 may be displayed, showing the details of multiple pieces of AI-generated product review content.

It should be noted that, in specific implementations, the AI content generation model may not only be used to summarize various source material content to obtain product review content, but may also extract representative user review content from user review content corresponding to at least one associated product of the target product, such that the representative user review content corresponding to the associated products may also be cited based on the detail page of the target product. For example, for the pendant shown in (A) of FIG. 3, the specific number of user review entries is 0; however, multiple pieces of product review content summarized by AI may be displayed on the product detail page, and/or representative user review content corresponding to associated products may be cited. For example, in this case, the AI-generated product review content may consist of 4 entries, among which two entries may evaluate the product from different dimensions such as applicable occasions and craftsmanship, respectively, a third entry may directly cite user review content for the same-style product, and so on. It should be noted here that, when citing or referencing user review content of same-style/similar-style products, only the review content related to the product itself may be cited or referenced; if the content involves evaluations of the merchant or evaluations of logistics, such content need not be cited; however, if the same-style/similar-style products are from the same merchant, the evaluations of the merchant may also be cited or referenced together.

It should be noted that, in the embodiments of the present disclosure, the disclosed method may specifically be applied in a variety of e-commerce scenarios, including, for example, cross-border e-commerce scenarios. In cross-border e-commerce scenarios, in addition to generating product review content, multilingual translation may also be performed. For example, for AI-generated review content for the same product, when displayed to users in different countries/regions, the content may be translated into the corresponding language to facilitate reading by users.

The foregoing describes specific implementations for AI-generated product review content. In an optional approach, during the process of generating product review content, the AI content generation model may also generate core decision attributes for the current product, where such core decision attributes may be at the leaf category granularity, in order to guide users in submitting reviews. It should be noted here that, in the prior art, review guidance information is typically also provided for some categories, including providing certain core decision attributes and corresponding candidate options, so as to enable users to quickly complete their product reviews without having to type out the review content for each specific core decision attribute word by word. However, the core decision attributes in the prior art are typically manually defined, and therefore this functionality can generally only be supported for a limited number of categories. In the embodiments of the present disclosure, the AI content generation model may generate core decision attributes at the leaf category granularity for specific products and provide corresponding candidate options, thereby generating structured review guidance information. In this way, more leaf categories can have structured review guidance information, thereby helping to improve the user review submission rate for products.

Specifically, since the specific source material content that is acquired may include user review content of products under the leaf category to which the target product belongs, the AI content generation model may generate, based on information about products under the leaf category to which the target product belongs, the core decision attributes at the leaf category granularity and the corresponding optional candidate attribute values. In this way, upon receiving a request submitted by a user to submit a review for the target product, structured review guidance information may be provided, where the review guidance information includes the core decision attributes at the leaf category granularity and the corresponding optional candidate attribute values.

It should be noted here that the core decision attributes used to guide users in submitting reviews are generated at the leaf category granularity, meaning that different products under the same leaf category may share the same core decision attributes. This may differ from the core decision attributes directly incorporated into the review content when AI generates review content, where the latter may be core decision attributes at the target product granularity, that is, more focused on the attributes of the product itself, which may better align with users' mental models.

In addition, in practical applications, besides review content, there is typically another type of feedback mechanism, namely Q&A-style opinion feedback content such as "Ask the Community," where users ask and answer questions among themselves. Generally, this type of Q&A-style opinion feedback content is also very helpful to users in making purchasing decisions. However, there are also cases where some products may have no users leaving such Q&A-style opinion feedback content, or the quantity is very small. Therefore, in the embodiments of the present disclosure, such Q&A-style opinion feedback content may also be generated through the AI content generation model. In order to make the generated Q&A-style opinion feedback content more rigorous, the AI content generation model may generate Q&A-style opinion feedback content for the target product based solely on information related to the target product itself (including detailed description information, and/or conversation record information from the customer service system related to the target product, etc.), that is, without necessarily referencing relevant reviews or opinion feedback of other associated products, but instead generating such Q&A-style opinion feedback content based on information related to the current target product itself.

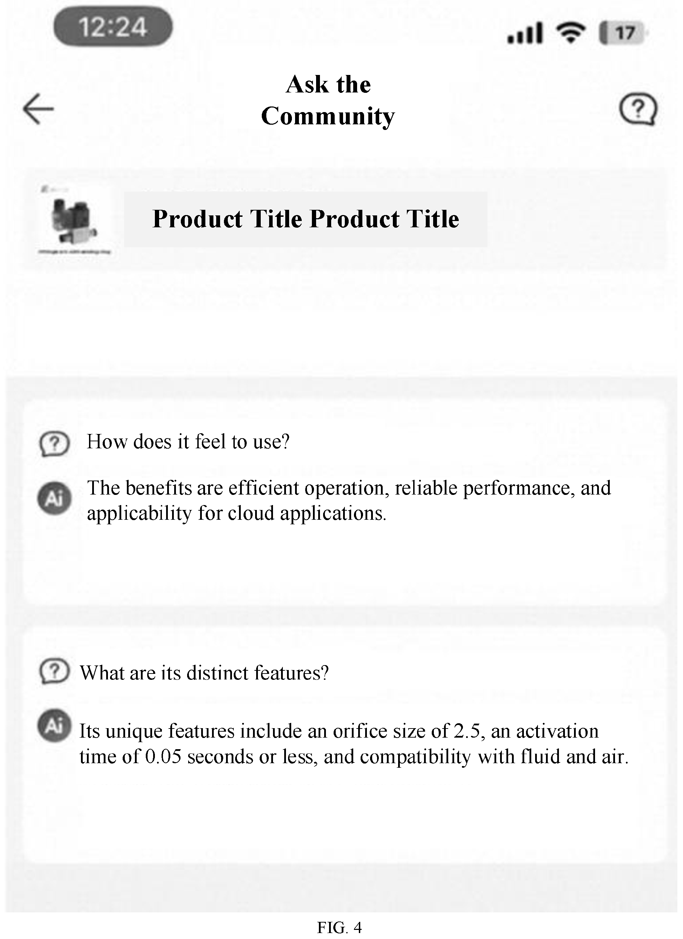

Regarding Q&A-style opinion feedback content, the AI content generation model may directly generate specific questions and corresponding answer content, or, if users have already submitted questions for the target product, the AI content generation model may also generate answers to such user questions, and so on. For example, as shown in FIG. 4, it illustrates the "Ask the Community" interface of an electronic product, in which two user-submitted questions and AI-generated answer content are displayed. As can be seen from FIG. 4, during specific display, an "AI" label or similar marker may also be added to the AI-generated content.

In summary, through the embodiments of the present disclosure, for newly released products or target products with a relatively low user review submission rate, information related to the target product itself, and/or user review content corresponding to at least one associated product of the target product may be acquired as source material content, and based on the source material content, a pre-trained artificial intelligence (AI) content generation model is invoked so that the AI content generation model generates product review content for the target product. Such AI-generated product review content may be used for display on a target page associated with the target product. In this way, the AI-generated product review content can serve as a supplement to user review content, thereby helping users make shopping decisions and contributing to the improvement of metrics such as the conversion rate of product detail pages and other pages.

### Embodiment 2

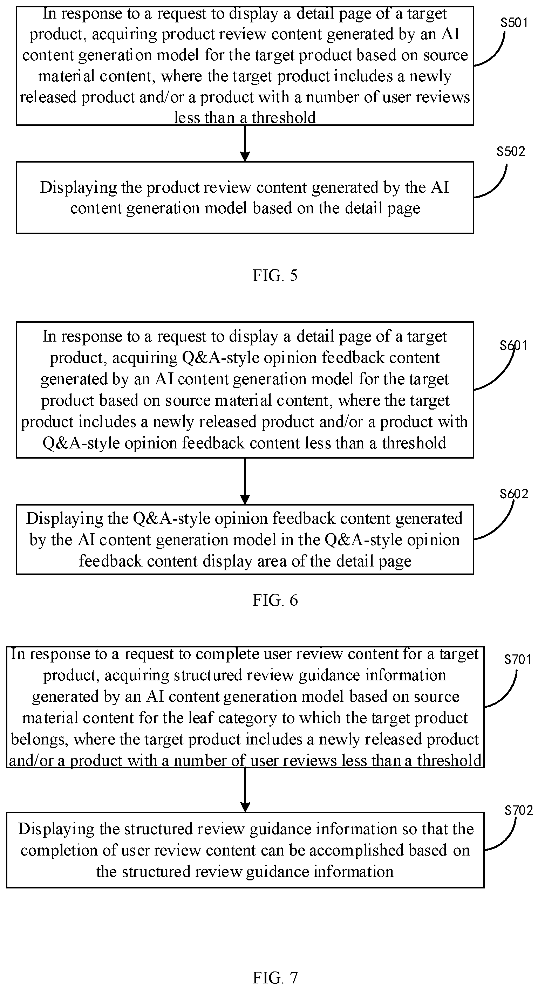

Embodiment 2 corresponds to Embodiment 1 and provides, from the perspective of a client-side application facing consumer users, a method for displaying a product detail page. Referring to FIG. 5, the method may include:
S501: in response to a request to display a detail page of a target product, acquiring product review content generated by an AI content generation model for the target product based on source material content, where the target product includes a newly released product and/or a product with a number of user reviews less than a threshold, and the source material content includes information related to the target product itself, and/or user review content corresponding to at least one associated product of the target product;
S502: displaying the product review content generated by the AI content generation model based on the detail page.

Here, the at least one associated product comprises same-style/similar-style products of the target product, and/or products under the leaf category to which the target product belongs.

The AI content generation model may specifically be configured to summarize product review content from the source material content, and/or extract representative user review content from the user review content corresponding to at least one associated product of the target product, for use as product review content for the target product. Therefore, when performing display, the product review content summarized by the AI content generation model may be displayed based on the detail page of the target product, and/or the representative user review content corresponding to the associated products extracted by the AI content generation model may be cited.

When specifically displaying the product review content generated by the AI content generation model based on the detail page, multiple approaches are available. For example, in one approach, the product review content generated by the AI content generation model may be displayed directly in the user review content display area of the detail page. Alternatively, in another approach, a separate AI-generated content display sub-area may be added within the user review content display area of the detail page, and the product review content generated by the AI content generation model may be displayed in the AI-generated content display sub-area. In this way, the AI-generated review content can be more explicitly distinguished from the review content published by users for the current target product, making it easier for browsing users to differentiate between the two. Additionally, regardless of which display approach is used, an "AI Generated" label may be added to AI-generated review content.

### Embodiment 3

Embodiment 3 also corresponds to Embodiment 1 and provides, from the perspective of a client-side application facing consumer users, a method for displaying a product detail page, directed at AI generation of "Ask the Community" content. Referring to FIG. 6, the method may include:
S601: in response to a request to display a detail page of a target product, acquiring Q&A-style opinion feedback content generated by an AI content generation model for the target product based on source material content, where the target product includes a newly released product and/or a product with Q&A-style opinion feedback content less than a threshold, and the source material content includes detailed description information of the target product and/or conversation record information related to the target product in the customer service system;
S602: displaying the Q&A-style opinion feedback content generated by the AI content generation model in the Q&A-style opinion feedback content display area of the detail page.

### Embodiment 4

Embodiment 4 also corresponds to Embodiment 1 and provides, from the perspective of a client-side application facing consumer users, a method for displaying a product review editing interface. Referring to FIG. 7, the method may include:
S701: in response to a request to fill in user review content for a target product, acquiring structured review guidance information generated by an AI content generation model based on source material content for the leaf category to which the target product belongs, where the target product includes a newly released product and/or a product with a number of user reviews less than a threshold, the structured review guidance information includes core decision attributes at the leaf category granularity and corresponding optional candidate attribute values, and the source material content includes user review content of products under the leaf category to which the target product belongs;
S702: displaying the structured review guidance information so that the filling in of user review content can be accomplished based on the structured review guidance information.

Regarding the parts not described in detail in the above Embodiments 2 through 4, reference may be made to Embodiment 1 and other parts of this specification, and further description is omitted here.

It should be noted that the embodiments of the present disclosure may involve the use of user data, and in practical applications, specific personal data of users may be used in the solutions described herein in compliance with the applicable laws and regulations of the country where the application is implemented (e.g., with the user's explicit consent, with effective notice to the user, etc.) and within the scope permitted by applicable laws and regulations.

Corresponding to the aforementioned method Embodiment 1, the embodiments of the present disclosure also provide a product review content generation apparatus, which may include:
a target product determination unit, configured to determine a target product for which review content supplementation is to be performed, where the target product comprises a newly released product and/or a product with a number of user reviews less than a threshold;
a source material content acquisition unit, configured to acquire source material content, where the source material content includes information related to the target product itself, and/or user review content corresponding to at least one associated product of the target product;
a review content generation unit, configured to invoke a pre-trained artificial intelligence AI content generation model based on the source material content, so as to generate product review content for the target product through the AI content generation model, for display on a target page associated with the target product.

Here, the information related to the target product itself comprises: detailed description information of the target product, and/or conversation record information related to the target product in a customer service system.

The at least one associated product includes a same-style/similar-style product of the target product, and/or a product under the leaf category to which the target product belongs.

Specifically, the product review content comprises multiple pieces of content, each used to evaluate the target product from a different dimension.

Here, the AI content generation model is specifically configured to generate, based on the source material content, core decision attributes at the target product granularity, such that the generated product review content includes the core decision attributes and their attribute values.

Specifically, the attribute values corresponding to the core decision attributes may be quantitatively expressed fine-grained attribute values.

In addition, the associated products include products under the leaf category to which the target product belongs; in this case, the AI content generation model is further configured to generate core decision attributes at the leaf category granularity and corresponding optional candidate attribute values based on information about products under the leaf category to which the target product belongs, so as to provide structured review guidance information after receiving a request submitted by a user to submit a review for the target product.

In addition, the AI content generation model is further configured to generate Q&A-style opinion feedback content for the target product based on information related to the target product itself.

Corresponding to Embodiment 2, the embodiments of the present disclosure also provide an apparatus for displaying a product detail page, which may include:
a product review content acquisition unit, configured to, in response to a request to display a detail page of a target product, acquire product review content generated by an AI content generation model for the target product based on source material content, where the target product includes a newly released product and/or a product with a number of user reviews less than a threshold, and the source material content includes information related to the target product itself, and/or user review content corresponding to at least one associated product of the target product;
a product review content display unit, configured to display the product review content generated by the AI content generation model based on the detail page.

Here, the at least one associated product comprises a same-style/similar-style product of the target product, and/or a product under the leaf category to which the target product belongs.

The AI content generation model is specifically configured to summarize the product review content from the source material content, and/or extract representative user review content from user review content corresponding to at least one associated product of the target product, to be used as product review content for the target product;

Specifically, the product review content display unit may be specifically configured to: display the product review content summarized by the AI content generation model based on the detail page of the target product, and/or cite representative user review content corresponding to the at least one associated product extracted by the AI content generation model.

Specifically, the product review content display unit may be specifically configured to:
displaying the product review content generated by the AI content generation model in a user review content display area on the detail page.

Alternatively, the product review content display unit may also be configured to:
adding a separate AI-generated content display sub-area in the user review content display area of the detail page, and displaying the product review content generated by the AI content generation model in the AI-generated content display sub-area.

Corresponding to Embodiment 3, the embodiments of the present disclosure also provide an apparatus for displaying a product detail page, the apparatus comprising:
a Q&A-style opinion feedback content acquisition unit, configured to, in response to a request to display a detail page of a target product, acquire Q&A-style opinion feedback content generated by an AI content generation model for the target product based on source material content, where the target product includes a newly released product and/or a product with Q&A-style opinion feedback content less than a threshold, and the source material content includes detailed description information of the target product, and/or conversation record information related to the target product in a customer service system;
a Q&A-style opinion feedback content display unit, configured to display the Q&A-style opinion feedback content generated by the AI content generation model in the Q&A-style opinion feedback content display area of the detail page.

Corresponding to Embodiment 4, the embodiments of the present disclosure also provide an apparatus for displaying a product review editing interface, which may include:
a structured review guidance information acquisition unit, configured to, in response to a request to fill in user review content for a target product, acquire structured review guidance information generated by an AI content generation model based on source material content for the leaf category to which the target product belongs, where the target product includes a newly released product and/or a product with a number of user reviews less than a threshold, the structured review guidance information includes core decision attributes at the leaf category granularity and corresponding optional candidate attribute values, and the source material content includes user review content of products under the leaf category to which the target product belongs;
a structured review guidance information display unit, configured to display the structured review guidance information so as to complete the filling in of user review content based on the structured review guidance information.

In addition, the embodiments of the present disclosure also provide a computer-readable storage medium having a computer program stored thereon, the program, when executed by a processor, implementing the steps of the method described in the aforementioned method embodiments.

And an electronic device, comprising:
one or more processors; and
a memory associated with the one or more processors, the memory being configured to store program instructions that, when read and executed by the one or more processors, implement the steps of the method described in the aforementioned method embodiments.

A computer program product comprising a computer program/computer-executable instructions that, when executed by a processor in an electronic device, implement the steps of the method described in the aforementioned method embodiments.

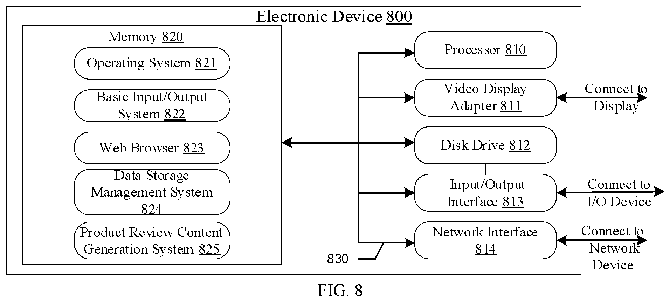

FIG. 8 exemplarily illustrates the architecture of an electronic device, which may specifically include a processor 810, a video display adapter 811, a disk drive 812, an input/output interface 813, a network interface 814, and a memory 820. The processor 810, the video display adapter 811, the disk drive 812, the input/output interface 813, and the network interface 814 may be communicatively connected to the memory 820 via a communication bus 830.

The processor 810 may be implemented using a general-purpose CPU (Central Processing Unit), a microprocessor, an Application Specific Integrated Circuit (ASIC), or one or more integrated circuits, and is configured to execute relevant programs to implement the technical solutions provided by the present disclosure.

The memory 820 may be implemented in the form of ROM (Read Only Memory), RAM (Random Access Memory), static storage devices, dynamic storage devices, or the like. The memory 820 may store an operating system 821 for controlling the operation of the electronic device 800, and a basic input/output system (BIOS) for controlling low-level operations of the electronic device 800. In addition, the memory 820 may also store a web browser 823, a data storage management system 824, and a product review content generation system 825, among others. The product review content generation system 825 described above may be an application program that specifically implements the operations of the foregoing steps in the embodiments of the present disclosure. In summary, when the technical solutions provided by the present disclosure are implemented by software or firmware, the relevant program code is stored in the memory 820 and is invoked and executed by the processor 810.

The input/output interface 813 is used to connect input/output modules to enable information input and output. The input/output modules may be configured as components within the device (not shown in the figure), or may be externally connected to the device to provide corresponding functions. The input devices may include a keyboard, a mouse, a touch screen, a microphone, various sensors, and the like, and the output devices may include a display, a speaker, a vibrator, an indicator light, and the like.

The network interface 814 is used to connect a communication module (not shown in the figure) to enable communication interaction between the device and other devices. The communication module may implement communication via wired means (e.g., USB, network cable, etc.) or via wireless means (e.g., mobile network, WIFI, Bluetooth, etc.).

The communication bus 830 includes a pathway for transferring information among the various components of the device (e.g., the processor 810, the video display adapter 811, the disk drive 812, the input/output interface 813, the network interface 814, and the memory 820).

It should be noted that although the device described above shows only the processor 810, the video display adapter 811, the disk drive 812, the input/output interface 813, the network interface 814, the memory 820, the communication bus 830, and the like, in a specific implementation, the device may also include other components necessary for normal operation. Furthermore, those skilled in the art will appreciate that the device described above may include only the components necessary to implement the solutions of the present disclosure, and need not include all of the components shown in the figure.

From the description of the foregoing embodiments, those skilled in the art can clearly understand that the present disclosure may be implemented by means of software plus a necessary general-purpose hardware platform. Based on such understanding, the technical solutions of the present disclosure, in essence or the part that contributes to the prior art, may be embodied in the form of a software product, which may be stored in a storage medium, such as ROM/RAM, a magnetic disk, an optical disc, or the like, and includes a number of instructions for causing a computer device (which may be a personal computer, a server, or a network device, etc.) to execute the methods described in each embodiment or certain parts of the embodiments of the present disclosure.

Each embodiment in this specification is described in a progressive manner, and the same or similar parts among the embodiments may be referred to each other; each embodiment focuses on the differences from other embodiments. In particular, for system or system embodiments, since they are substantially similar to method embodiments, the description is relatively simple, and reference may be made to the relevant portions of the method embodiment descriptions where applicable. The systems and system embodiments described above are merely illustrative, and the units described as separate components may or may not be physically separate, and the components shown as units may or may not be physical units, i.e., they may be located in one place or may be distributed across multiple network units. Some or all of the modules may be selected according to actual needs to achieve the purpose of the solution of the present embodiment. Those of ordinary skill in the art can understand and implement the present disclosure without inventive effort.

The method for generating product review content and the electronic device provided by the present disclosure have been described in detail above. Specific examples have been applied herein to illustrate the principles and implementations of the present disclosure. The description of the foregoing embodiments is only intended to help understand the method of the present disclosure and its core ideas. At the same time, for those of ordinary skill in the art, based on the ideas of the present disclosure, there will be changes in specific implementations and scope of application. In summary, the content of this specification should not be construed as limiting the present disclosure.

## Claims

1. A method for generating product review content, comprising:
determining a target product for which review content supplementation is to be performed, wherein the target product comprises a newly released product and/or a product with a number of user reviews less than a threshold;
acquiring source material content, wherein the source material content includes information related to the target product itself, and/or user review content corresponding to at least one associated product of the target product;
invoking a pre-trained artificial intelligence (AI) content generation model based on the source material content, so that the AI content generation model generates product review content for the target product, for display on a target page associated with the target product.

2. The method of claim 1, wherein the information related to the target product itself comprises: detailed description information of the target product, and/or, conversation record information related to the target product in a customer service system.

3. The method of claim 1 or 2, wherein the at least one associated product comprises a same-style/similar-style product of the target product, and/or, a product under a leaf category to which the target product belongs.

4. The method of any one of claims 1 to 3, wherein the product review content comprises a plurality of pieces, each used to evaluate the target product from a different dimension.

5. The method of any one of claims 1 to 4, wherein the AI content generation model is specifically configured to generate core decision attributes at a target product granularity based on the source material content, such that the generated product review content includes the core decision attributes and their attribute values.

6. The method of claim 5, wherein the attribute values corresponding to the core decision attributes are quantitatively expressed fine-grained attribute values.

7. The method of any one of claims 1 to 6, wherein:
the at least one associated product comprises a product under the leaf category to which the target product belongs;
the AI content generation model is further configured to generate, based on information of products under the leaf category to which the target product belongs, core decision attributes at a leaf category granularity and corresponding optional candidate attribute values, so as to provide structured review guidance information after receiving a request submitted by a user to submit a review for the target product.

8. The method of any one of claims 1 to 7, wherein the AI content generation model is further configured to generate Q&A-style opinion feedback content for the target product based on information related to the target product itself.

9. A method for displaying a product detail page, comprising:
in response to a request to display a detail page of a target product, acquiring product review content generated by an AI content generation model for the target product based on source material content, wherein the target product includes a newly released product and/or a product with a number of user reviews less than a threshold, and the source material content includes information related to the target product itself, and/or user review content corresponding to at least one associated product of the target product;
displaying the product review content generated by the AI content generation model based on the detail page.

10. The method of claim 9, wherein the AI content generation model is specifically configured to summarize the product review content from the source material content, and/or, extract representative user review content from user review content corresponding to at least one associated product of the target product, to be used as product review content for the target product;
the displaying the product review content generated by the AI content generation model based on the detail page comprises:
displaying the product review content summarized by the AI content generation model based on the detail page of the target product, and/or citing the representative user review content corresponding to the at least one associated product extracted by the AI content generation model.

11. The method of claim 9, wherein the displaying, based on the detail page, the product review content generated by the AI content generation model comprises:
displaying the product review content generated by the AI content generation model in a user review content display area on the detail page.

12. The method of claim 9, wherein the displaying, based on the detail page, the product review content generated by the AI content generation model comprises:
adding a separate AI-generated content display sub-area in the user review content display area of the detail page, and displaying the product review content generated by the AI content generation model in the AI-generated content display sub-area.

13. A method for displaying a product detail page, comprising:
in response to a request to display a detail page of a target product, acquiring Q&A-style opinion feedback content generated by an AI content generation model for the target product based on source material content, where the target product includes a newly released product and/or a product with an amount of Q&A-style opinion feedback content less than a threshold, and the source material content includes detailed description information of the target product, and/or conversation record information related to the target product in a customer service system;
displaying the Q&A-style opinion feedback content generated by the AI content generation model in a Q&A-style opinion feedback content display area on the detail page.

14. A method for displaying a product review editing interface, comprising:
in response to a request to fill in user review content for a target product, acquiring structured review guidance information generated by an AI content generation model for the leaf category to which the target product belongs based on source material content, wherein the target product comprises a newly released product and/or a product with a number of user reviews less than a threshold, the structured review guidance information comprises core decision attributes at a leaf category granularity and corresponding optional candidate attribute values, and the source material content comprises user review content of products under the leaf category to which the target product belongs;
displaying the structured review guidance information to facilitate filling in the user review content based on the structured review guidance information.

15. A computer-readable storage medium having a computer program stored thereon, wherein when the program is executed by a processor, the steps of the method according to any one of claims 1 to 14 are implemented.

16. An electronic device, comprising:
one or more processors; and
a memory associated with the one or more processors, the memory configured to store program instructions that, when read and executed by the one or more processors, perform the steps of the method according to any one of claims 1 to 14.

17. A computer program product comprising a computer program/computer-executable instructions, wherein the computer program/computer-executable instructions, when executed by a processor in an electronic device, implement the steps of the method according to any one of claims 1 to 14.
